# EUROPÄISCHE PATENTANMELDUNG

(11) **EP 2 244 352 A2**
(43) Veröffentlichungstag der Anmeldung: **27.10.2010**
(21) Anmeldenummer: 10004204.3
(22) Anmeldetag: 20.04.2010
(51) Int. Cl.: H02J 7/35

(54) **Photovoltaikanlage mit Batterie und Ersatzkraftwerk**

(30) Priorität: 21.04.2009 DE 102009018240
(71) Anmelder: Adensis GmbH, 01099 Dresden (DE)
(72) Erfinder: Beck, Bernhard, 97332 Volkach OT Dimbach (DE)

(57) **Zusammenfassung**

Es wird ein Verfahren zum Betrieb einer Photovoltaik-Anlage mit einer Vielzahl von Photovoltaik-Modulen (2) und mit einem an eine erste und zweite Gruppe (Q1, Q2) der Photovoltaik-Module (2) angeschlossenen ersten und zweiten Gleichstrom-Motoren (5, 11) angegeben. Die Motorachse (17) des ersten Motors (5) ist an die Welle (15) eines Drehstrom-Generator (13) angekoppelt, wobei der Drehstrom-Generator (13) an ein Stromversorgungsnetz (28) anschließbar ist. Die Motorachse (19) des zweiten Gleichstrom-Motors (11) ist ebenfalls mit der Welle (15) verbindbar. Die von den Photovoltaik-Modulen (2) erzeugte elektrische Energie beider Gruppen (Q1, Q2) wird zunächst nur zum Antrieb des einen Gleichstrom-Motors (5) verwendet; sie wird im weiteren Betriebsverlauf auf beide Gleichstrom-Motoren (5, 11) aufgeteilt. Es ist eine Batterie (31) vorgesehen, die anstelle der Photovoltaik-Module (2) der zweiten Gruppe (Q2) mit dem zweiten Gleichstrommotor (11) verbunden werden kann, indem zuvor die Erregung des Gleichstrommotors (11) so geändert wird, dass seine Motorspannung der Leerlaufspannung der Batterie (31) entspricht.

## Beschreibung

Die Erfindung betrifft ein Verfahren und eine Vorrichtung zum Betrieb einer Photovoltaik-Anlage mit einer Vielzahl von Photovoltaik-Modulen und mit einem ersten und einem zweiten an die Photovoltaik-Module angeschlossenen Gleichstrom-Motor, die an einen Drehstrom-Generator angekoppelt oder ankoppelbar sind, wobei der Drehstrom-Generator an ein Stromversorgungsnetz anschließbar ist, und wobei die von den Photovoltaik-Modulen gelieferte elektrische Energie frei wählbar auf die beiden Gleichstrom-Motoren verteilt wird.

Eine solche Vorrichtung ist in der nicht vorveröffentlichten Appl. No. 12/649,536 (BECK-8; Ad 16/08US) vorgeschlagen.

Bei der Errichtung von Solarkraftwerken ist es in den Abnahmeverträgen mit dem zugehörigen Energieversorger zum Teil vorgesehen, eine vertraglich zugesicherte Mindestleistung innerhalb einer festgelegten Zeitspanne in das Versorgungsnetz einzuspeisen. So z.B. kann bei einem 2,4 Megawatt Solarkraftwerk gefordert werden, dass zwischen 11.00 Uhr und 17.00 Uhr eine Leistung von mindestens 60 Prozent, also ca.1,5 Megawatt einzuspeisen ist. Je nach Wetterlage ist die Mindestleistung nicht immer alleine von der Solaranlage erzeugbar.

Der Erfindung liegt die Aufgabe zugrunde, ein Verfahren und eine Vorrichtung der eingangs genannten Art so zu modifizieren, dass eine gewünschte Mindestleistung zu jeder Zeit abrufbar ist.

Diese Aufgabe wird bezüglich des Verfahrens erfindungsgemäß dadurch gelöst, dass davon ausgegangen wird, dass eine erste Gruppe der Photovoltaik-Module am ersten Gleichstrom-Motor und eine zweite Gruppe der Photovoltaik-Module am zweiten Gleichstrom-Motor angeschlossen ist, dass an einem der beiden Gleichstrom-Motoren eine Batterie anschließbar ist, und dass eine Regel- und Steuereinheit in einem Schritt die Umschaltung der von den Photovoltaik-Modulen gelieferten Energie auf einen der Gleichstrom-Motoren bewirkt und in einem weiteren Schritt auf die Erregung des einen Gleichstrom-Motors derart Einfluss nimmt, dass dessen Motorspannung bei gewünschter Batterieentladung unterhalb der Batterieleerlaufspannung liegt, so dass sich die Batterie in den besagten Gleichstrom-Motor entlädt.

Hierbei können die beiden genannten Schritte auch mit einander vertauscht sein.

Durch diese Maßnahme wird erreicht, dass bei Abfall der Photovoltaik-Anlage unter die Mindestleistung aus der Batterie heraus der Fehlbetrag eingespeist werden kann.

Da die Batterie nur über einen beschränkten Zeitraum von einigen Minuten den Fehlbetrag an Energie ausgleichen kann, ist es sinnvoll, ein Ersatzkraftwerk zur Einspeisung vorzubereiten, sobald sich abzeichnet, dass die bei der Photovoltaikanlage vorliegende Unterschreitung der Mindestleistung nicht nur vorübergehender Natur ist, wie z.B. eine einzelne vorbeiziehende Wolke. Insofern sollte das Zuschalten der Batterie mit dem Anfahren eines Ersatzkraftwerks oder dem Zuschaltvorgang eines bereits laufenden Ersatzkraftwerks verbunden werden. Das Ersatzkraftwerk ist zur Lieferung von Gleichstrom geeignet und kann dabei ein herkömmlicher Dieselgenerator mit Gleichrichter sein, der in ca. 1 Minute die ergänzende Leistung zur Verfügung stellen kann, oder aber eine Brennstoffzelle sein. Die Zeitspanne, die zwischen der Anforderung durch die Steuer- und Regeleinheit bis zum eigentlichen Zuschalten auf den Gleichstrom-Motor vergeht, liegt also vorteilhafterweise zwischen 1 und 5 Minuten, insbesondere zwischen 2 und 4 Minuten.

Ein Kriterium, das zu dem Anfordern der zusätzlichen Kraftwerksleistung führt, kann zum Beispiel sein, dass die von den Photovoltaik-Modulen erzeugte elektrische Leistung über eine vorgebbare Zeitspanne hinweg einen Mindestwert unterschreitet. Ein anderes mögliches Kriterium kann sein, dass das Produkt aus der von den Photovoltaik-Modulen erzeugten elektrischen Leistung und einer Zeitspanne (also das Integral über die Leistung) einen vorwählbaren Mindestwert unterschreitet. Es sind weitere Kriterien vorstellbar, die die Natur des beobachteten Leistungsabfalls der Photovoltaik-Anlage berücksichtigen, wie z.B. harte Schatten - Licht - Wechsel, Schäfchenwolken, Hochnebel etc.

Bei der eigentlichen Zuschaltung der Batterie an den Gleichstrommotor ist es vorteilhaft, wenn die Regel- und Steuereinheit die Motorspannung zunächst möglichst exakt auf die Batterieleerlaufspannung regelt und danach die Motorspannung weiter absenkt, um einen gewünschten Entladestrom einzustellen. Diese Maßnahme bietet den Vorteil, dass die Batterie quasi stromlos an den Gleichstrommotor angeschlossen wird, was einen Verschleiß des zugehörigen Schalters gering hält.

Das Absenken kann inkremental oder kontinuierlich erfolgen. Dabei kann bei der Verringerung der Motorspannung auch die Einstellung eines gewünschten Verhältnisses von PV-Modul-Einspeiseleistung zu Batterie-Einspeiseleistung sinnvoll sein.

Die Batterie selber kann aus einer Vielzahl von konventionellen Autobatterien bestehen, deren jeweilige Kurzzeitbelastbarkeit mindestens 500 Ampere ist, die teilweise in Reihe geschaltet sind, um eine Batteriespannung von 96 Volt zu ergeben, und die teilweise parallel geschaltet sind, um den Gesamtausgangsstrom zu erhöhen. Die Batteriespannung von 96 Volt wird als ein guter Kompromiss zwischen den hohen, zu übertragenden Strömen und der Anzahl an zu überwachender Batteriezellen angesehen. Die Batterie kann prinzipiell jeden Spannungswert zwischen 80 und 150 Volt annehmen, wobei bei einer Einspeiseleistung von z.B. 400 KW bei einer Spannung von 100 Volt bereits ein Strom von Viertausend Ampere zum Antreiben des Gleichstrommotors vorliegt. Bei einer effektiven Überwachungsmöglichkeit der Zellen kann die Batteriespannung auch auf die Spannung der Photovoltaikanlage von z.B. 400 Volt ausgelegt sein.

Die Batterie kann entweder über ein externes Ladegerät, über die Photovoltaikanlage selber mittels Erhöhung der Motorspannung auf einen Wert oberhalb der Nennspannung der Batterie oder über das Ersatzkraftwerk aufgeladen werden. Dabei können mehrere der genannten Möglichkeiten zugleich vorgesehen sein. Die Wahl der Aufladung ist dann von der Art der Stromentnahme über die Batterie abhängig. Kann zum Beispiel mittags eine hohe PV-Leistung im kurzzeitigen Wechsel mit Abschattungen vorliegen, bietet sich der Einsatz des Gleichrichterladegerätes an, da es beliebig häufig und kurzfristig ohne einen aufwändigen Ankoppelvorgang an die Batteriepole anschließbar ist.

Es ist sinnvoll, die Batterie stets auf einen möglichst hohen Ladezustand zu bringen und dort zu halten. Dazu sollte sich an jeden Entladevorgang der Batterie unmittelbar ein Ladevorgang anschließen, gegebenenfalls unter Hinzuziehung des bereits erwähnten Ersatzkraftwerks. Dies ist auch wichtig im Hinblick auf die Verwendung eines Bleiakkus als Batterie, der immer möglichst geladen sein sollte und nie eine Tiefentladung erfahren sollte, was zu einer Schädigung der Zellen führen kann.

Zur Schonung der Gleichstrommaschinen ist es zweckmäßigerweise vorgesehen, dass die Steuer- und Regeleinheit mit dem Messwert der Temperatur desjenigen Gleichstrom-Motors versorgt wird, der von der Photovoltaikanlage angetrieben wird, und dass bei Überschreiten einer vorgebbaren Grenztemperatur ein Wechsel erfolgt derart, dass der Anschluss der Batterie von dem bisher von der Photovoltaik-Anlage versorgten Gleichstrom-Motor auf den anderen Gleichstrom-Motor erfolgt, und dass der andere, bisher von der Batterie angetriebene Gleichstrom-Motor nunmehr von der Photovoltaik-Anlage angetrieben wird. Besonders vorteilhaft ist es, wenn beide Gleichstrom-Motoren mit einer Einrichtung zur Temperaturüberwachung versehen sind, da sowohl der Gleichstrom-Motor, der mit der gesamten Last der Photovoltaikanlage beaufschlagt wird, überhitzen kann, als auch der andere Gleichstrom-Motor, der mit dem hohen Batteriestrom bei niedriger Spannung gespeist wird. Hier muss die Steuer- und Regeleinheit einen Ausgleich schaffen, indem eventuell mehrmals zwischen den Energiequellen gewechselt wird, die die Gleichstrom-Motoren antreiben.

Wenn sich beide Gleichstrom-Motoren einer vorgebbaren oberen Temperatur nähern, ist das Zuschalten eines Ersatzkraftwerks praktisch obligatorisch. Das Ersatzkraftwerk kann mit 400 Volt oder auch der PV-Anlagenspannung von ca. 700 Volt als Ausgangsspannung betrieben werden, wodurch wieder Ströme nahe dem Nennstrom der GleichstromMaschinen vorliegen. Idealerweise wird die Ausgangsspannung des Ersatzkraftwerkes auf die Spannung der Photovoltaikanlage geregelt. Dies ermöglicht es, nach dem vorübergehenden Einsatz der Batterie diese Batterie für eine längere Zeit von z.B. 5 bis 20 Minuten durch das Ersatzkraftwerk als Leistungslieferant zu ersetzen, und die Erregung des Gleichstrommotors wieder auf die Ausgangsspannung der PV-Anlage einzuregeln. Dann kann der zuvor über die Batterie betriebene Gleichstrommotor simultan sowohl von dem Ersatzkraftwerk, als auch von der Photovoltaikanlage gespeist werden. Gewisse Ausgleichsströme werden in Kauf genommen, oder die Ausgangsspannung des Ersatzkraftwerks wird kontinuierlich an die Spannung der PV-Anlage angepasst. Bei dieser Vorgehensweise kann eine hohe Mindestleistung, z.B. von 80 % der Nennleistung der Photovoltaik-Anlage, zugesichert werden.

Bezüglich der Vorrichtung zeichnet sich die erfindungsgemäße Photovoltaik-Anlage aus durch eine Vielzahl von Photovoltaik-Modulen, durch zwei an die Photovoltaik-Module zuschaltbare Gleichstrom-Motoren, die falls zugeschaltet von den Photovoltaik-Modulen mit einer Gleichspannung und einem Gleichstrom gespeist werden, durch einen Drehstrom-Generator, der mit dem ersten und/oder dem zweiten Gleichstrom-Motor mittels jeweils einer Kupplung verbindbar ist und der zur Zuleitung der von ihm erzeugten Wechselspannung an ein Stromversorgungsnetz anschließbar ist, und durch eine an zumindest einen der Gleichstrom-Motoren zuschaltbare Batterie, deren Zuschaltung von einer Regel- und Steuereinheit gesteuert wird, wobei ein Zuschaltkriterium eine vorgebbare Mindestausgangsleistung des Drehstrom-Generators ist.

Es ergeben sich im Wesentlichen die gleichen zuvor beschriebenen Vorteile in Verbindung mit den zum Verfahren diskutierten Ausgestaltungen, die analog auch bei der Vorrichtung einsetzbar sind.

Die Möglichkeit des Umschaltens der erzeugten Gesamtleistung auf einen einzigen Gleichstrom-Motor wird dadurch bereitgestellt, dass die Photovoltaik-Module in eine erste und in eine zweite Menge aufgeteilt sind, dass die erste Menge die von ihr erzeugte Leistung an einem ersten Ausgang und die zweite Menge die von ihr erzeugte Leistung an einem zweiten Ausgang zur Verfügung stellt, wobei der erste und der zweite Ausgang jeweils mittels eines Schaltelementes mit dem Eingang des ersten bzw. des zweiten Gleichstrom-Motors verbindbar sind, und dass ein Brückenschalter im geschlossenen Zustand den ersten Ausgang mit dem zweiten Ausgang verbindet. Hier ist primär an eine Parallelschaltung der beiden Ausgänge gedacht.

Weitere Vorteile und Ausgestaltungen der Erfindung ergeben sich aus der Beschreibung von Ausführungsbeispielen anhand der Figuren. Es zeigen:
- Fig. 1: ein Prinzipschaltbild eines elektromechanischen Konverters mit zwei Gleichstrommotoren, einem Drehstromgenerator und einer Batterie; und
- Fig. 2: ein Prinzipschaltbild eines elektromechanischen Konverters mit zwei Gleichstrommotoren, einem Drehstromgenerator und einer Batterie sowie einem Ersatzkraftwerk.

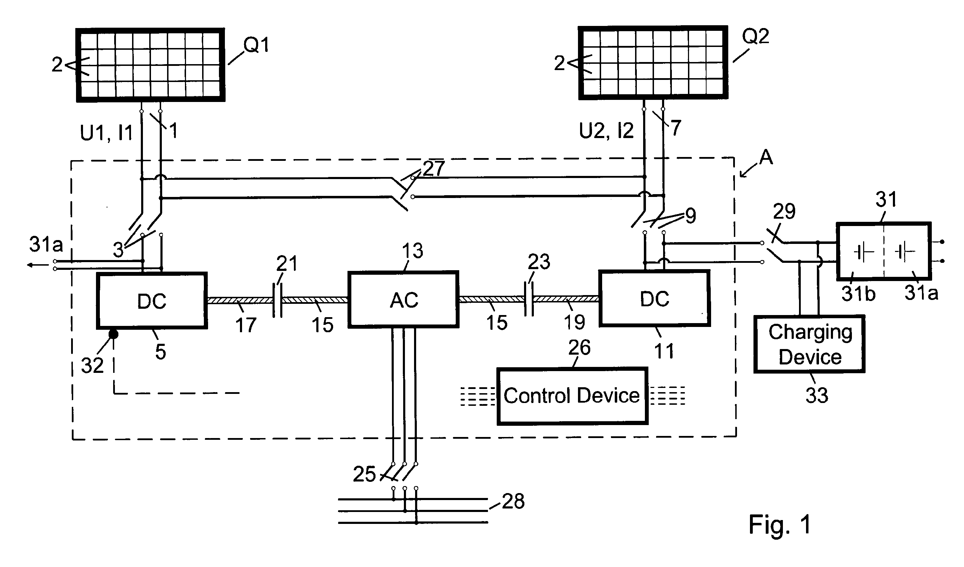

In der Figur 1 ist in einer Photovoltaik-Anlage A mit Q1 eine erste Menge an Photovoltaikmodulen 2 als erste Energiequelle bezeichnet, die ein erstes Ausgangsklemmenpaar 1 aufweist, an denen eine Gleichspannung U1 und ein Gleichstrom I1 abgreifbar sind. Über einen ersten Schalter 3 kann das Ausgangsklemmenpaar 1 mit einem ersten fremderregten Gleichstrommotor 5 verbunden werden, um diesen anzutreiben.

Analog hierzu befinden sich auf der rechten Figurenseite eine zweite Menge Q2 an Photovoltaikmodulen 2 als zweite Energiequelle, die ein zweites Ausgangsklemmenpaar 7 aufweist, an denen eine Gleichspannung U2 und ein Gleichstrom I2 abgreifbar sind. Über einen zweiten Schalter 9 kann das Ausgangsklemmenpaar 7 mit einem zweiten fremderregten Gleichstrommotor 11 verbunden werden, um diesen anzutreiben.

Zwischen den beiden Gleichstrommotoren 5, 11 ist ein Drehstromgenerator 13 angeordnet, dessen Generator-Welle 15 mit den beiden Motorachsen 17, 19 der Gleichstrommotoren 5 bzw.11 fluchtet. Die Generatorwelle 15 ist links und rechts vom Drehstromgenerator 13 herausgeführt und am jeweils freien Ende mit einer Kupplung 21 bzw. 23 versehen. Mittels der Kupplungen 21, 23 sind die Achsen 17, 19 der Gleichstrommotoren 5, 11 getrennt mit dem Drehstromgenerator 13 verbindbar. Es kann alternativ auch eine starre Verbindung ohne Kupplungen 21, 23 vorgesehen sein. Der Drehstromgenerator 13 weist ein elektrisches Anschluss- oder Schaltelement 25 auf, um ihn zwecks Weitergabe seiner Wechselspannung an ein Stromversorgungsnetz 28 anzuschließen.

Es ist eine Steuer- und Regeleinheit 26 vorgesehen, die die Schalter 3 und 9 steuert, was durch gestrichelte Linien angedeutet ist. Sie kann (über gestrichelt eingezeichnete Leitungen) auch die Kupplungen 21, 23 trennen oder zusammenfügen. Die Steuer- und Regeleinheit 26 ist auch mit einem Signalgenerator ausgerüstet, der die Betätigung eines Brückenschalters 27 steuert, mit dem die Ausgangsklemmen 1 und 7 mit einander verbunden werden können. Bei geschlossenem Brückenschalter 27 sind die beiden Ausgänge 1 und 7 parallel geschaltet. Beim Anfahrbetrieb des ersten Gleichstrommotors 5 ist der Brückenschalter 27 geschlossen, und die Leistung E2 der zweiten Energiequelle Q2 steht neben der Leistung E1 der ersten Energiequelle Q1 ebenfalls am Eingang des ersten Gleichstrommotors 5 zur Verfügung. Erreicht die Leistung des ersten Gleichstrommotors 5 einen vorgegebenen Wert, insbesondere z. B. seine Nennleistung, wird der Brückenschalter 27 geöffnet. Die von der Energiequelle Q2 erzeugte elektrische Energie wird dann zum Anfahren und weiteren Betrieb des zweiten Gleichstrommotors 11 verwendet. Ist die Drehzahl von dessen Achse 19 an die der Welle 15 angepasst, wird von der Steuer- und Regeleinheit 26 ein Signal zur Einleitung des Einkupplungsvorgangs der Kupplung 23 gegeben. Nach erfolgter Ankopplung bilden die Achsen 17, 19 zusammen mit der Welle 15 einen gemeinsamen Drehverbund.

An den zweiten Gleichstrommotor 11 ist über einen Batterieschalter 29 eine Batterie 31 zuschaltbar. Die Batterie 31 wiederum ist, gegebenenfalls über einen weiteren, nicht gezeigten Schalter, mit einem Ladegerät 33 verbunden, insbesondere mit einem Gleichrichter-Ladegerät, das z. B. aus dem Stromversorgungsnetz 28 gespeist wird.

Für den Fall, dass an dem Anschlusselement 25 keine festgelegte Mindestleistung in das Netz 28 eingespeist werden kann, ist die Steuer- und Regeleinheit 26 dazu ausgebildet, zunächst den Schalter 9 zu öffnen, über eine Änderung der Erregung des zweiten Gleichstrommotors 11 dessen Motorspannung auf die Batterieleerlaufspannung zu regeln und anschließend den Batterieschalter 29 zu schließen, um zusätzlich zu der Solarenergie weitere Energie in die Anlage A einzuspeisen. Der Einspeisevorgang wird dadurch erreicht, dass nach dem Schließen des Batterieschalters 29 die Motorspannung am zweiten Gleichstrommotor 11 verringert wird, was einen Leistungsfluss von der Batterie 31 in den zweiten Gleichstrommotor 11 hinein bewirkt.

Im Normalbetrieb wird die volle Anlagenleistung erreicht. Dann ist der Brückenschalter 27 geöffnet, ebenso ist der Batterieschalter 29 geöffnet, so dass von der Batterie 31 her keine Leistung eingespeist wird; die erste Energiequelle Q1 speist dann den ersten Motor 5, und die zweite Energiequelle Q2 speist den zweiten Motor 11.

Die Steuerung und Regelung der Gleichstrommotoren 5 und 11 geschieht zweckmäßigerweise nach dem MPP-Verfahren. Ein hier bevorzugtes Beispiel ist in der US-2007-0290636-A1(= US 7,609,019) beschrieben. Diese Druckschrift wird durch diese Zitierung hiermit inkorporiert.

Erst wenn die Leistung E1+E2 der beiden Energiequellen Q1 und Q2 zusammen unterhalb der im Liefervertrag zugesicherten Mindestleistung liegt, wird der Brückenschalter 27 geschlossen, der Schalter 9 wird geöffnet, und der Batterieschalter 29 wird ebenfalls geschlossen. Dann wird die Batterie 31 auf den zweiten Motor 11 geschaltet. Die Batterie 31 stockt somit die von den Energiequellen Q1, Q2 gelieferte Leistung auf die zugesicherte Mindestleistung auf.

Es wird bei der Betrachtung davon ausgegangen, dass der erste Motor 5 von der Photovoltaikanlage A (d. h. von beiden Energiequellen Q1 und Q2 gemeinsam) und dass der zweite Motor 11 von der Batterie 31 angetrieben wird. Hier besteht die Gefahr, dass der erste Motor 5 sich dabei überhitzt.

Vorzugsweise ist sowohl der erste Gleichstrommotor 5, als auch der zweite Gleichstrommotor 11 an die Batterie 31 anschließbar. Dabei spielt es keine Rolle, ob ein Umschalter vorgesehen ist oder ob - wie gestrichelt angedeutet - die Batterie 31 in zwei getrennte Batterien 31a, 31 b aufgeteilt ist, von denen eine Batterie 31a dem ersten Gleichstrommotor 5 zugeordnet ist und die andere Batterie 31b dem zweiten Gleichstrommotor 11. Diese Maßnahme ist im Zusammenhang mit der folgenden Betrachtung zur Erwärmung der Gleichstrommaschinen 5, 11 von Bedeutung.

Zur Schonung der Gleichstrommaschinen 5, 11 ist zweckmäßigerweise eine Einrichtung zur Temperaturüberwachung vorgesehen. Dabei ist vorgesehen, dass die Steuer- und Regeleinheit 26 von einem Sensor 32 (über eine der gestrichelt gezeichneten Leitungen) mit dem Messwert der Temperatur des ersten Gleichstrommotors 5 versorgt wird. Angenommen, der erste Motor 5 läuft an Q1 und Q2, und der zweite Motor 11 läuft an der Batterie 31. Am ersten Motor 5 besteht die Gefahr der Überhitzung. Nun erfolgt eine Sicherheitsmaßnahme dadurch, dass bei Überschreiten einer vorgebbaren Grenztemperatur ein Wechsel erfolgt derart, dass die Einspeisung von der Batterie 31 an den bisher von Q1 und Q2 versorgten ersten Gleichstrommotor 5 auf den anderen Gleichstrommotor 11 übergeht, und dass der andere, bisher lediglich von der Batterie 31 angetriebene zweite Gleichstrommotor 11 nun von Q1 und Q2 angetrieben wird. Die Antriebsverhältnisse werden also vertauscht.

Besonders vorteilhaft ist es, wenn beide Gleichstrommotoren 5, 11 mit einer Einrichtung zur Temperaturüberwachung versehen sind, da sowohl der Gleichstrommotor, der mit der gesamten Last der Photovoltaikanlage beaufschlagt wird, überhitzen kann, als auch der andere Gleichstrommotor, der mit dem hohen Batteriestrom bei niedriger Spannung gespeist wird. Hier sollte die Steuer- und Regeleinheit 26 einen Ausgleich schaffen, indem eventuell mehrmals zwischen den Energiequellen, nämlich Solarenergie (Q1 und Q2) einerseits und Batterie 31 (Ersatzquelle) andererseits, gewechselt wird.

Die Gleichstrommotoren 5, 11 können trotz ihrer Belastung mit nur einem Teil der Gesamtnennleistung doch einzeln überlastet werden. Dieser Fall liegt vor, wenn die Mindestleistung von z.B. 70 % der Nennleistung (erste und zweite Energiequelle Q1, Q2 zusammengenommen) nicht erreicht wird, wenn die PV-Anlage (Q1 und Q2 zusammen) aber immerhin doch 60% ihrer Nennleistung erbringt. Dann erfolgt die Umleitung der von der zweiten Energiequelle Q2 gelieferten Energie mittels Schließens des Brückenschalters 27 auf die erste Gleichstrommaschine 5, die dann mit 60% der Gesamtenergie belastet wird. Dies bedeutet, bezogen auf die halbe Gesamtleistung, die auf diesen Gleichstrommotor 5 entfällt, eine Überlast um 20 %.

Dies wird an einem Zahlenbeispiel deutlich: Es liege eine Solaranlage A mit einer Gesamtleistung von 2,4 Megawatt vor, die in gleich große Anlagenteile geteilt ist, so dass die Leistung E1 von Q1 gleich der Leistung E2 von Q2, also jeweils gleich 1,2 Megawatt, beträgt. Die jeweils zugeordneten Gleichstrom-Motoren 5, 11 sind entsprechend jeweils mit einer Nennleistung von 1,2 MW ausgeführt. Die aktuelle Sonneneinstrahlung liefert eine Leistung von 1,44 Megawatt, was einer Leistung von 60 % der Photovoltaik-Anlage (Q1 + Q2) entspricht. Zur Einhaltung des Liefervertrages mit dem Energieversorger sind aber 70 % der Nennleistung, entsprechend 1,68 Megawatt, zu liefern. Es fehlen also 0,24 MW, die über eine Ersatzquelle einzuspeisen sind. Nach dem Öffnen des Schalters 9 und Schließen des Brückenschalters 27 liegen an dem ersten Gleichstrom-Motor 5 also 1,44 Megawatt an, das bedeutet 0,24 Megawatt (= 20 % der Nennleistung dieses einen Gleichstrom-Motors von 1,2 MW) mehr als die Leistung, für die bei Dauerbetrieb der erste Gleichstrom-Motor 5 ausgelegt ist. Der zweite Gleichstrom-Motor 11 wird aus der Batterie 31 mit den fehlenden 0,24 Megawatt versorgt.

Es ist also sinnvoll, beide Gleichstrommotoren 5, 11 mit einer Einrichtung zur Temperaturüberwachung zu versehen, die eine Überhitzung vermeiden hilft. Es wird also zunächst einer der Gleichstrom-Motoren 5, 11 mit dem höheren Strom betrieben, bis dieser eine maschinenbedingte Grenztemperatur erreicht hat. Dann wird der oben angesprochene Tausch vorgenommen. Dabei wird der betreffende wärmere Gleichstrom-Motor 5, 11 bei Erreichen der Grenztemperatur mit dem geringeren Strom betrieben, und der andere, kühlere Gleichstrom-Motor 5, 11 wird fortan mit derjenigen Energiequelle (PV-Anlage oder Batterie) betrieben, die den höheren Strom an den Motor 5, 11 abgibt.

Anstelle einer Regelung alleine über die Größe des Stroms kann auch eine genauere Einleitung des Wechsels und Rückwechsels mit Hilfe einer Analyse der jeweils im Gleichstrom-Motor 5, 11 entstehenden Verlustleistung vorgenommen werden.

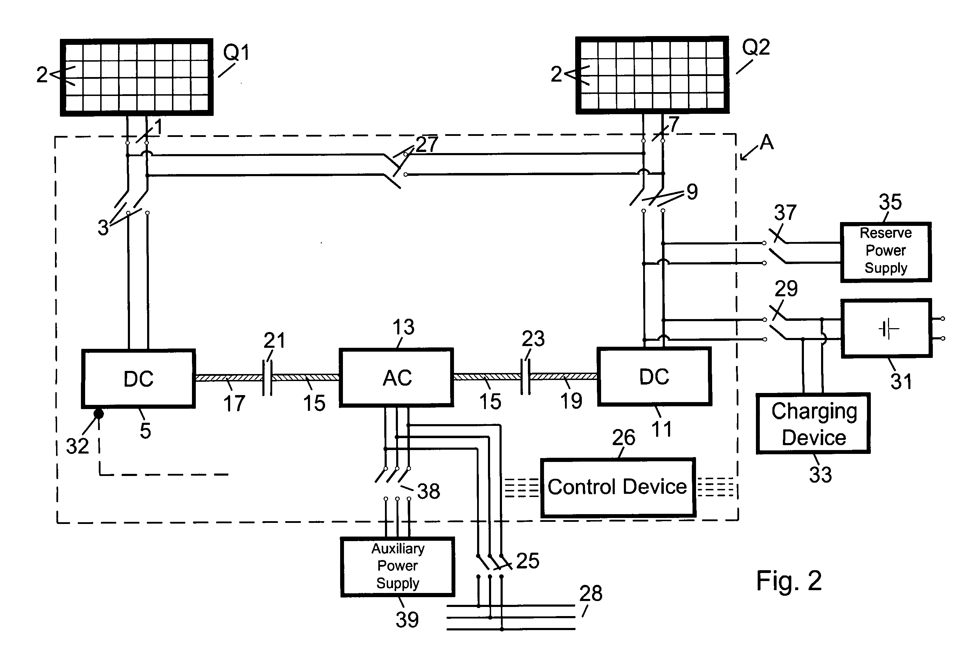

Wenn die reduzierte Leistung der Photovoltaikanlage (Q1 + Q2) über einen längeren Zeitraum von mehreren Minuten dauern könnte, sollte zur Sicherstellung der Lieferung einer Mindestmenge an Energie in das Stromnetz 28 auf die in der Figur 2 gezeigte Ausführungsform zurückgegriffen werden.

In der Figur 2 sind gleiche Teile mit gleichen Bezugszeichen versehen wie in Fig. 1. Die Figur 2 entspricht der Figur 1, allerdings ergänzt um ein DC-Ersatzkraftwerk 35, welches mittels eines Zusatzschalters 37 an den zweiten Gleichstrommotor 11 anschließbar ist.

Die Batterie 31 kann nur zu einer kurzzeitigen Überbrückung eines Engpasses dienen, um die zugesagte Mindest-Leistung der PV-Anlage A zu erbringen. Bei einer andauernden Minderleistung ist es vorgesehen, das DC-Ersatzkraftwerk 35 anstelle der Batterie 31 an den zweiten Gleichstrommotor 11 anzuschließen. Je nach gewähltem DC-Ersatzkraftwerk 35 sind unterschiedliche Anfahrzeiten erforderlich, um das Ersatzkraftwerk 35 zuschaltfertig zu machen. So beträgt die Vorbereitungszeit bis zum Zuschaltzustand bei einem Dieselgenerator mit Gleichrichter ca. 1 Minute, wohingegen sie bei einer Brennstoffzelle bis zu mehreren Minuten dauern kann. Entsprechend ist die Steuer- und Regeleinheit 26 so auszulegen, dass das Ersatzkraftwerk 35 frühzeitig angefahren wird, bevor die Gefahr droht, dass die Batterie 31 nicht mehr bis zum Zuschaltzeitpunkt durchhält.

Ein Kriterium für die Initiierung des Zuschaltvorgangs kann sein, dass die von den Photovoltaik-Modulen 2 erzeugte elektrische Leistung über eine vorgebbare Zeitspanne hinweg einen Mindestwert unterschreitet. Das heißt z.B., dass der Zuschaltvorgang eingeleitet wird, wenn innerhalb eines Zeitraums von 1 Minute die Photovoltaikanlage mit Q1, Q2 unterhalb der Mindestleistung blieb und die Batterie 31 während dieser einen Minute zugeschaltet werden musste. Ein anderes Kriterium kann vorsehen, dass der Zuschaltvorgang dann erfolgt, wenn das Produkt aus von den Photovoltaik-Modulen 2 erzeugter elektrischer Leistung und einer Zeitspanne einen vorwählbaren Mindestwert unterschreitet. Das heißt z.B., dass das Ersatzkraftwerk 35 zugeschaltet wird, wenn über einen Zeitraum von 6 Minuten hinweg eine elektrische Leistung von 20 % der Batteriekapazität aufgebraucht wurde, weil sie zur Aufstockung der Minderleistung zwecks Deckung der vertraglich garantierten Leistungsabgabe herangezogen wurde.

Im Grunde genommen ist es unerheblich, ob die Kriterien so ausgelegt sind, dass das Ersatzkraftwerk 35 vorbereitet wird, oder dass der Zuschaltzeitpunkt als Basis für die Berechnung dient. Im zweiten Fall muss dann die erforderliche Rüstzeit des Ersatzkraftwerks 35 mit in die Berechnung einfließen.

Das Ersatzkraftwerk 35 dient zum einen dazu, die Batterie 31 zügig aufzuladen, und zum anderen dient es zur Bereitstellung der Mindestleistung für eine relativ kurze Dauer von z.B. 5 bis 20 Minuten.

Sollte es aber absehbar sein, dass die Zusatzleistung von der Batterie 31 und dem Ersatzkraftwerk 35 über einen längeren Zeitraum von z.B. 20 Minuten bis zu mehreren Stunden erforderlich ist, wird mittels eines Schaltelements 38 ein Zusatzkraftwerk 39 auf der AC-Seite hinzugeschaltet. Dieses Zusatzkraftwerk 39 ist ebenfalls in Fig. 2 eingetragen. Es kann räumlich getrennt an einer anderen Stelle im Versorgungsnetz 28 angeordnet sein. So kann es sich um ein Gaskraftwerk handeln, welches nach einer Rüstzeit von ca. 4 Minuten zur Einspeisung zur Verfügung steht. Das Anlaufenlassen und/oder Zuschalten des Zusatzkraftwerks 39 wird dann ebenfalls von der Steuer- und Regeleinheit 26 vorgenommen.

Zusammenfassend wird also ein Verfahren zum Betrieb einer Photovoltaik-Anlage (A) mit einer Vielzahl von Photovoltaik-Modulen (2) und mit einem ersten und einem zweiten an die Photovoltaik-Module (2) angeschlossenen Gleichstrom-Motor (5 bzw.11), die mit einem Drehstrom-Generator (13) verbunden oder verbindbar sind, wobei der Drehstrom-Generator (13) an ein Stromversorgungsnetz (28) anschließbar ist, und wobei die von den Photovoltaik-Modulen (2) gelieferte elektrische Energie (E1 + E2) frei wählbar auf die beiden Gleichstrom-Motoren (5, 11) verteilt wird, **dadurch gekennzeichnet, dass** davon ausgegangen wird, dass eine erste Gruppe (Q1) der Photovoltaik-Module (2) am ersten Gleichstrom-Motor (5) und eine zweite Gruppe (Q2) der Photovoltaik-Module (2) am zweiten Gleichstrom-Motor (11) angeschlossen ist, dass eine Regel- und Steuereinheit (26) in einem Schritt die Umschaltung der von den Photovoltaik-Modulen (2) gelieferten Energie (E1 + E2) auf einen (5) der Gleichstrom-Motoren (5, 11) und den Anschluss einer Batterie (31) auf den anderen (11) der beiden Gleichstrom-Motoren (5, 11) bewirkt und in einem weiteren Schritt auf die Erregung des anderen Gleichstrom-Motors (11) derart Einfluss nimmt, dass dessen Motorspannung bei gewünschter Batterieentladung unterhalb der Batterieleerlaufspannung liegt, so dass sich die Batterie (31) in den besagten anderen Gleichstrom-Motor (11) entlädt, angegeben.

### Bezugszeichenliste

- A: Photovoltaik-Anlage
- E1: elektrische Energie
- E2: elektrische Energie
- Q1: erste Energiequelle
- Q2: zweite Energiequelle
- 1: Ausgangsklemmenpaar von Q1
- 3: erster Schalter
- 5: erster Gleichstrommotor (Gleichstrommaschine)
- 7: Ausgangsklemmenpaar von Q2
- 9: zweiter Schalter
- 11: zweiter Gleichstrommotor (Gleichstrommaschine)
- 13: Drehstromgenerator
- 15: Welle
- 17: Motorachse des ersten Gleichstrommotors 5
- 19: Motorachse des zweiten Gleichstrommotors 11
- 21: erste Kupplung
- 23: zweite Kupplung
- 25: Anschlusselement
- 26: Steuer- und Regeleinheit
- 27: Brückenschalter
- 28: Stromversorgungsnetz
- 29: Batterieschalter
- 31: Batterie
- 32: Sensor für Temperatur
- 33: Ladegerät
- 35: Ersatzkraftwerk
- 37: Zusatzschalter
- 38: Schaltelement
- 39: Zusatzkraftwerk

## Patentansprüche

1. Verfahren zum Betrieb einer Photovoltaik-Anlage (A) mit einer Vielzahl von Photovoltaik-Modulen (2) und mit einem ersten und einem zweiten an die Photovoltaik-Module (2) angeschlossenen Gleichstrom-Motor (5 bzw.11), die mit einem Drehstrom-Generator (13) verbunden oder verbindbar sind, wobei der Drehstrom-Generator (13) an ein Stromversorgungsnetz (28) anschließbar ist, und wobei die von den Photovoltaik-Modulen (2) gelieferte elektrische Energie (E1 + E2) frei wählbar auf die beiden Gleichstrom-Motoren (5, 11) verteilt wird, **dadurch gekennzeichnet, dass** ausgehend von einem Betriebszustand, in dem je eine Gruppe (Q1, Q2) der Photovoltaik-Modulen (2) einen der beiden Gleichstrom-Motoren (5, 11) speist, in beliebiger Reihenfolge folgende Schritte vorgenommen werden:
a) In einem ersten Schritt werden beide Gruppen (Q1, Q2) der Photovoltaik-Module (2) gemeinsam an einen (5) der beiden Gleichstrom-Motoren (5, 11) geschaltet, sodaß die von den beiden Gruppen (Q1, Q2) erzeugte Energie (E1 + E2) an diesen einen Gleichstrom-Motor (5) geliefert wird,
b) in einem zweiten Schritt wird eine Batterie (31) an den anderen (11) der beiden Gleichstrom-Motoren (5, 11) angeschlossen, und
c) in einem dritten Schritt wird auf die Erregung des besagten anderen Gleichstrom-Motors (11) derart Einfluss genommen, dass dessen Motorspannung bei gewünschter Batterieentladung unterhalb der Batterieleerlaufspannung liegt, so dass sich die Batterie (31) in den besagten anderen Gleichstrom-Motor (11) entlädt.

2. Verfahren nach Anspruch 1, **dadurch gekennzeichnet, dass** die Regel- und Steuereinheit (26) die Motorspannung zunächst möglichst exakt auf die Batterieleerlaufspannung regelt und danach die Motorspannung weiter absenkt, um einen gewünschten Entladestrom zu erhalten.

3. Verfahren nach Anspruch 1, **dadurch gekennzeichnet dass** die Regeleinheit (26) über die Änderung der Erregung die Motorspannung zunächst auf die Batteriespannung setzt, und dass anschließend die Motorspannung weiter verringert wird, bis ein gewünschtes Verhältnis von Einspeiseleistung der Photovoltaik-Module (2) zu Batterie-Einspeiseleistung eingestellt ist.

4. Verfahren nach einem der Ansprüche 1 bis 3, **dadurch gekennzeichnet, dass** das Anschließen der Batterie (31) mit dem Anfahren eines Ersatzkraftwerks (35) oder dem Zuschaltvorgang eines laufenden Ersatzkraftwerks (35) verbunden ist.

5. Verfahren nach einem der Ansprüche 1 bis 4, **dadurch gekennzeichnet, dass** die Batterie (31) aus einer Vielzahl von konventionellen Autobatterien besteht, deren jeweilige Kurzzeitbelastbarkeit mindestens 500 Ampere ist, die teilweise in Reihe geschaltet sind, um eine Batteriespannung von 96 Volt zu ergeben und die teilweise parallel geschaltet sind, um den Gesamtausgangsstrom zu erhöhen.

6. Verfahren nach Anspruch 4, **dadurch gekennzeichnet, dass** der Zuschaltvorgang dann erfolgt, wenn die von den Photovoltaik-Modulen (2) erzeugte elektrische Leistung über eine vorgebbare Zeitspanne hinweg einen Mindestwert unterschreitet.

7. Verfahren nach Anspruch 6, **dadurch gekennzeichnet, dass** die Zeitspanne zwischen 1 und 5 Minuten, insbesondere zwischen 2 und 4 Minuten, liegt.

8. Verfahren nach Anspruch 4, **dadurch gekennzeichnet, dass** der Zuschaltvorgang dann erfolgt, wenn das Produkt aus von den Photovoltaik-Modulen (2) erzeugter elektrischer Leistung und einer Zeitspanne einen vorwählbaren Mindestwert unterschreitet.

9. Verfahren nach einem der Ansprüche 1 bis 8, **dadurch gekennzeichnet, dass** die Batterie (31)
a) entweder über ein externes Ladegerät (38),
b) über die Photovoltaikanlage (A) mittels Erhöhung der Motorspannung auf einen Wert oberhalb der Nennspannung der Batterie (31) oder
c) über das Ersatzkraftwerk (35) aufgeladen wird.

10. Verfahren nach einem der Ansprüche 1 bis 9, **dadurch gekennzeichnet, dass** sich an jeden Entladevorgang der Batterie (31) unmittelbar ein Ladevorgang anschließt, gegebenenfalls unter Hinzuziehung des Ersatzkraftwerks (35).

11. Verfahren nach einem der Ansprüche 1 bis 10, **dadurch gekennzeichnet, dass** die Steuer- und Regeleinheit (26) mit dem Messwert der Temperatur desjenigen Gleichstrom-Motors (5) versorgt wird, der von der Photovoltaik-Anlage (Q1, Q2) angetrieben wird, und dass bei Überschreiten einer vorgebbaren Grenztemperatur ein Wechsel erfolgt derart, dass der Anschluss der Batterie (31) an den bisher von der Photovoltaik-Anlage (Q1, Q2) versorgten Gleichstrom-Motor (5) nun auf den anderen Gleichstrom-Motor (11) erfolgt und dass der andere, bisher von der Batterie (31) angetriebene Gleichstrom-Motor (11) von der Photovoltaik-Anlage (Q1, Q2) angetrieben wird.

12. Photovoltaik-Anlage (A) zur Durchführung des Verfahrens nach einem der Ansprüche 1 bis 11, **gekennzeichnet durch** eine Vielzahl von Photovoltaik-Modulen (2), zwei an die Photovoltaik-Module (2) zuschaltbare Gleichstrom-Motoren (5, 11), die falls zugeschaltet von den Photovoltaik-Modulen (2) mit einer Gleichspannung (U) und einem Gleichstrom (I) gespeist werden, einen Drehstrom-Generator (13), der mit dem ersten und/oder dem zweiten Gleichstrom-Motor (5, 11) mittels jeweils einer Kupplung (21, 23) verbindbar ist und der zur Zuleitung der von ihm erzeugten Wechselspannung an ein Stromversorgungsnetz (28) anschließbar ist, und mit einer an zumindest einen der Gleichstrom-Motoren (5, 11) zuschaltbaren Batterie (31), deren Zuschaltung von einer Regel- und Steuereinheit (26) gesteuert wird, wobei ein Zuschaltkriterium eine vorgebbare Mindestausgangsleistung des Drehstrom-Generators (13) ist.

13. Photovoltaik-Anlage (A) nach Anspruch 12, **dadurch gekennzeichnet, dass** die Photovoltaik-Module (2) in eine erste und in eine zweite Menge (Q1, Q2) aufgeteilt sind, dass die erste Menge (Q1) die von ihr erzeugte Leistung an einem ersten Ausgang (1) und die zweite Menge (Q2) die von ihr erzeugte Leistung an einem zweiten Ausgang (7) zur Verfügung stellt, wobei der erste und der zweite Ausgang (1, 7) jeweils mittels eines Schaltelementes (3, 9) mit dem Eingang des ersten bzw. des zweiten Gleichstrom-Motors (5, 11) verbindbar sind, und dass ein Brückenschalter (27) im geschlossenen Zustand den ersten Ausgang (1) mit dem zweiten Ausgang (7) verbindet.

14. Photovoltaik-Anlage (A) nach Anspruch 12 oder 13, **dadurch gekennzeichnet, dass** ein Ersatzkraftwerk (35) vorgesehen ist, das an mindestens einen der Gleichstrom-Motoren (5, 11) anschaltbar ist.

15. Photovoltaik-Anlage (A) nach einem der Ansprüche 12 bis 14, **dadurch gekennzeichnet, dass** auf der AC-Seite des Drehstrom-Generators (13) ein Zusatzkraftwerk (39) zuschaltbar ist.
